# EUROPÄISCHE PATENTANMELDUNG

(11) **EP 3 901 863 A1**
(43) Veröffentlichungstag der Anmeldung: **27.10.2021**
(21) Anmeldenummer: 20170691.8
(22) Anmeldetag: 21.04.2020
(51) Int. Cl.: G06Q 10/06, G06Q 50/06

(54) **VERFAHREN ZUM ERWEITERN EINES DEZENTRALEN ENERGIEVERSORGUNGSSYSTEMS, DEZENTRALES ENERGIEVERSORGUNGSSYSTEM UND COMPUTERPROGRAMMPRODUKT**

(71) Anmelder: Siemens Aktiengesellschaft, 80333 München (DE)
(72) Erfinder: Hoettecke, Lukas, 91052 Erlangen (DE); Schreck, Sebastian, 90429 Nürnberg (DE); Schäfer, Jochen, 90408 Nürnberg (DE); Thiem, Sebastian, 91413 Neustadt an der Aisch (DE)

(57) **Zusammenfassung**

Die Erfindung betrifft ein Verfahren zum Erweitern eines dezentralen Energieversorgungssystems, ein dezentrales Energieversorgungssystem und ein Computerprogrammprodukt. Zunächst wird ein Energieversorgungssystems mit wenigstens einem Energiesubsystem mit wenigstens einem Energieerzeuger und wenigstens einem Energieverbraucher, wobei der Energieerzeuger und der Energieverbraucher elektrisch verbunden sind und wenigstens zwei Knotenpunkte zwischen dem Energieerzeuger und dem Energieverbraucher angeordnet sind, bereitgestellt. Das Energieversorgungssystem umfasst weiterhin eine Erfassungseinheit, wobei die Erfassungseinheit Betriebsdaten aufnimmt und bereitstellt. Es werden weiterhin Ausbaudaten zu dem Energieversorgungssystem für wenigstens eine Erweiterungskomponente für das Energieversorgungssystem durch eine Ausbausteuereinheit bereitgestellt. Es wird dann ein Ausbauergebnis der Art der Erweiterungskomponente und des Installationsortes der Erweiterungskomponente für das Energieversorgungssystem in einer Rechnereinheit basierend auf einer Lösung eines Optimierungsproblems ermittelt, wobei das Optimierungsproblem mittels eines computergestützten Optimierens einer Zielfunktion gelöst wird und wobei in die Zielfunktion und/oder die Nebenbedingungen des Optimierungsproblems die Betriebsdaten und die Ausbaudaten eingehen. Anschließend erfolgt in Abhängigkeit des Ausbauergebnisses ein Erweitern oder Reduzieren des Energieversorgungssystems um die ermittelte Art der Erweiterungskomponente an dem ermittelten Installationsort.

## Beschreibung

Die Erfindung betrifft ein Verfahren zum Erweitern eines dezentralen Energieversorgungssystems, ein dezentrales Energieversorgungssystem und ein Computerprogrammprodukt.

Ein Optimieren eines Energieversorgungssystems kann mittels der Optimierung der bereits installierten beziehungsweise bestehenden Komponenten erfolgen. Es kann aber ebenso eine sinnvolle Optimierung eines Energieversorgungssystems darstellen, das Energieversorgungssystem auszubauen, also zu erweitern.

Derzeit werden Erweiterungen und Ausbauten eines Energieversorgungssystems manuell basierend auf Kenntnis einzelner Komponenten des Energieversorgungssystems durchgeführt. Beispielsweise wird das Hinzufügen einer neuen Komponente, aus betriebswirtschaftlichen Gründen und/oder innovationstechnischen Gründen mittels einer manuellen Optimierung die Auslegung des Energieversorgungssystems ermittelt. Nachteilig wird eine Ausbauentscheidung also manuell basierend auf Einzeldaten ohne Kenntnis des gesamten Energieversorgungssystems getroffen.

Es ist daher Aufgabe der vorliegenden Erfindung, ein Verfahren zum Erweitern eines dezentralen Energieversorgungssystems, ein dezentrales Energieversorgungssystem und ein Computerprogrammprodukt anzugeben, welche einen computergestützten optimalen Ausbau des Energieversorgungssystems bezogen auf das gesamte Energieversorgungssystem ermöglicht.

Die Aufgabe wird mit einem erfindungsgemäßen Verfahren zum Ändern eines Energieversorgungssystems gemäß Anspruch 1, einem dezentralen Energieversorgungssystem gemäß Anspruch 10 und einem Computerprogrammprodukt gemäß Anspruch 15 gelöst.

Das erfindungsgemäße Verfahren zum Ändern des Aufbaus eines dezentralen Energieversorgungssystems umfasst mehrere Schritte. Zunächst erfolgt das Bereitstellen des Energieversorgungssystems mit wenigstens einem Energiesubsystem mit wenigstens einem Energieerzeuger und wenigstens einem Energieverbraucher. Der Energieerzeuger und der Energieverbraucher sind elektrisch verbunden. Wenigstens 2 Knotenpunkte sind zwischen dem Energieerzeuger und dem Energieverbraucher angeordnet. Das Energieversorgungssystem umfasst eine Erfassungseinheit, wobei die Erfassungseinheit Betriebsdaten aufnimmt und bereitstellt. Weiterhin werden von einer Ausbausteuereinheit Ausbaudaten zu dem Energieversorgungssystem für wenigstens eine Erweiterungskomponente für das Energieversorgungssystem bereitgestellt. Anschließend wird ein Ausbauergebnis der Art der Erweiterungskomponente und des Installationsortes der Erweiterungskomponente für das Energieversorgungssystem in der Ausbausteuereinheit ermittelt. Die Ermittlung erfolgt basierend auf einer Lösung eines Optimierungsproblems. Das Optimierungsproblem wird mittels eines computergestützten Optimierens einer Zielfunktion gelöst, wobei in die Zielfunktion und/oder in die Nebenbedingungen des Optimierungsproblems die Betriebsdaten und die Ausbaudaten eingehen. Anschließend erfolgt ein Erweitern oder Reduzieren des Energieversorgungssystems um die ermittelte Art der Erweiterungskomponente an dem ermittelten Installationsort.

Das erfindungsgemäße dezentrale Energieversorgungssystem umfasst wenigstens ein Energiesubsystem mit wenigstens einem Energieerzeuger und wenigstens einem Energieverbraucher. Der Energieerzeuger und der Energieverbraucher sind elektrisch verbunden. Zwischen dem Energieerzeuger und dem Energieverbraucher sind wenigstens zwei Knotenpunkte angeordnet. Das dezentrale Energieversorgungssystem umfasst weiterhin eine Erfassungseinheit, wobei die Erfassungseinheit eingerichtet ist, Betriebsdaten aufzunehmen und bereitzustellen. Das dezentrale Energieversorgungssystem umfasst weiterhin eine Ausbausteuereinheit, die eingerichtet ist zum Bereitstellen von Ausbaudaten zu dem Energieversorgungssystem für wenigstens eine Erweiterungskomponente für das Energieversorgungssystem. Die Ausbausteuereinheit ist weiterhin eingerichtet, ein Ausbauergebnis umfassend eine Art der Erweiterungskomponente und des Installationsortes der Erweiterungskomponente für das Energieversorgungssystem zu ermitteln. Das Ermitteln erfolgt basierend auf einem computergestützten Optimieren einer Zielfunktion, wobei in die Zielfunktion und/oder die Nebenbedingungen der Zielfunktion die Betriebsdaten und die Ausbaudaten eingehen.

Das erfindungsgemäße Computerprogrammprodukt umfasst Befehle, welche bei Ausführung eines Datenverarbeitungsprogramms durch eine Datenverarbeitungseinrichtung die Datenverarbeitungseinrichtung dazu veranlassen, ein Verfahren zum computergestützten Optimieren einer Zielfunktion gemäß einem der Ansprüche 1 bis 9 durchzuführen.

Als Knotenpunkte werden insbesondere Netzanschlusspunkte eines Energiesubsystems in einem elektrischen und/oder thermischen Energieversorgungssystem verstanden.

Zu den Betriebsdaten zählen Messdaten, insbesondere der Energiemenge und der Leistung, Lokationsdaten der Messtellen, Informationen über den Netzanschlusspunkt der Energiemarktteilnehmer, Kauf- und Verkaufsgebote an einem lokalen Energiemarkt umfassend Energiemengen und Energiepreisangaben. Ein solcher lokaler Energiemarkt ist beispielsweise aus dem Dokument EP 3518369 A1 bekannt.

Das Ausbauergebnis, also das Ergebnis darüber, ob Erweiterungskomponenten eingesetzt werden oder das Energiesystem um Komponenten reduziert wird, wird basierend auf Betriebsdaten und Ausbaudaten des Energieversorgungssystems getroffen. Vorteilhaft gehen somit umfassende Daten des gesamten Energieversorgungssystems in die Entscheidung mit ein. Somit ist es möglich, komplexe Zusammenhänge der unterschiedlichen Energieerzeuger und Energieverbraucher in Kombination mit unterschiedlichen Randbedingungen, insbesondere Effizienzerhöhungen oder Kostenoptimierung, in das Optimierungsproblem einzubinden und eine umfassende Lösung durch das Bereitstellen des Ausbauergebnisses zu bieten. Weiterhin wird das Ausbauergebnis vorteilhaft computergestützt bereitgestellt. Ein manuelles Auswerten einzelner Datenpunkte zu einzelnen Komponenten des Energieversorgungssystems ist nicht nötig. Vorteilhaft erhöht dies die Qualität der Aussage des Ausbauergebnisses, da das gesamte Energieversorgungssystem optimiert wird.

In einer vorteilhaften Ausgestaltung und Weiterbildung wird eine Soll-Konfiguration des Energieversorgungssystems anhand der Betriebsdaten in einem Energiedesignsystem ermittelt. Das dezentrale Energieversorgungssystem umfasst also ein Energiedesignsystem, welches dazu eingerichtet ist, eine Soll-Konfiguration des Energieversorgungssystems basierend auf den Betriebsdaten zu ermitteln. Die Soll-Konfiguration kann dabei nach Kriterien wie insbesondere der Minimierung der Kosten, Minimierung der Kohlenstoffdioxid-Emissionen oder der Maximierung der Versorgungssicherheit ermittelt werden. Mittels der durch die Erfassungseinheit erfassten Betriebsdaten wird eine Ist-Konfiguration des Energieversorgungssystems ermittelt und mit der Soll-Konfiguration verglichen. Darauf basierend wird die Flexibilität eines Knotenpunktes bestimmt. Diese Flexibilität geht in die Zielfunktion und/oder in die Nebenbedingungen des Optimierungsproblems ein. Die Flexibilität beschreibt einen Vergleichswert der Ist-Konfiguration zur Soll-Konfiguration. Insbesondere kann die Flexibilität durch Differenz zwischen der Ist-Konfiguration und der Soll-Konfiguration ermittelt werden. Ein Erweitern des Energieversorgungssystems erfolgt insbesondere an Knotenpunkten mit hoher Flexibilität. Vorteilhaft wird dadurch erreicht, dass die Stabilität des Energieversorgungssystems durch den Ausbau erhöht wird.

Weiterhin ist es mittels des Abgleichs der Soll-Konfiguration mit der Ist-Konfiguration auch möglich, bestehende Komponenten hinsichtlich einer Unterdimensionierung oder einer Überdimensionierung zu analysieren. Umfasst eine Komponente des Energiesystems beispielsweise mehrere Aggregate, so kann basierend auf einem die Fehldimensionierung beschreibenden Wert, eine Aussage über einen Zubau eines zusätzlichen Aggregates oder einen Abbau eines der installierten Aggregate getroffen werden. Mit anderen Worten kann basierend auf dem Wert der Fehldimensionierung die Komponente bezüglich ihrer Dimensionierung, beispielsweise ihrer Nennleistung und/oder Kapazität, vergrößert beziehungsweise verkleinert werden.

In einer weiteren Ausgestaltung und Weiterbildung der Erfindung wird eine Prognoseunsicherheit bestimmt und geht in die Zielfunktion und/oder in die Nebenbedingungen des Optimierungsproblems ein. Die Prognoseunsicherheit wird mittels eines Vergleichs der Gebote am lokalen Energiemarkt, welche in anderen Worten eine Prognose am lokalen Energiemarkt darstellen, mit den tatsächlichen Betriebsdaten, insbesondere mit Messwerten der dem Energiesubsystem bereitgestellten elektrischen Energie, ermittelt. Durch die Analyse der Betriebsdaten, insbesondere der Analyse der Messwerte der dem Energiesubsystem bereitgestellten elektrischen Energie, und der Gebote eines Energiesubsystem wird insbesondere festgestellt, dass eine hohe Prognoseungenauigkeit an einem Knotenpunkt vorliegt. Durch einen gezielten Ausbau eines solchen Knotenpunktes kann vorteilhaft die Prognoseunsicherheit verringert werden. In anderen Worten wird vorteilhaft die Prognosequalität erhöht. Vorteilhaft wird dadurch erreicht, dass die Stabilität des Energieversorgungssystems durch den Ausbau erhöht wird.

Insbesondere kann eine Analyse der Prognoseunsicherheit für einen Knotenpunkt erfolgen, der eine große Energiemenge aus einer Solarerzeugung bereitstellt, die nicht genau vorhergesagt wurde. Als Nebenbedingung für das Optimierungsproblem kann festgelegt werden, dass durch die Unsicherheit der Solarerzeugung an diesem Knotenpunkt immer eine definierte elektrische Leistung vorgehalten werden muss, um einen Ausfall der Energiebereitstellung zu kompensieren. Als ein Ausbauergebnis kann insbesondere vorteilhaft folgen, dass das Energiesubsystem um eine Speichereinheit an diesem Knotenpunkt erweitert werden soll.

Vorteilhaft ist es basierend auf der Prognoseunsicherheit auch möglich, eine Prognosequalität des Energiesubsystems zu bewerten. Dadurch erhöht sich vorteilhaft die Effizienz des Energieversorgungssystems, insbesondere der ökonomische Nutzen des Betreibers des Energieversorgungssystems, da aufgrund der erhöhten Prognosegenauigkeit weniger Strafkosten für eine Unterversorgung des Energieversorgungssystems anfallen.

In einer weiteren vorteilhaften Ausgestaltung und Weiterbildung der Erfindung wird die Flexibilität für jeden Knotenpunkt des Energieversorgungssystems ermittelt. Vorteilhaft wird somit das gesamte Energieversorgungssystem inklusive aller Energiesubsysteme analysiert und optimiert. Vorteilhaft wird dadurch erreicht, dass die Stabilität des gesamten Energieversorgungssystems durch den Ausbau erhöht wird.

In einer weiteren vorteilhaften Ausgestaltung und Weiterbildung der Erfindung wird als die Zielfunktion eine Effizienzoptimierung, eine Erhöhung des Anteils erneuerbarer Energien im Energieversorgungssystem, eine Reduzierung von Emissionen, eine Erhöhung der ökonomischen Wertschöpfung und/oder eine Erhöhung der Stabilität des Energieversorgungssystems verwendet.

Vorteilhaft ist es also möglich, basierend auf den Betriebsdaten, den Ausbaudaten und gegebenenfalls der Flexibilität und/oder der Prognoseunsicherheit unterschiedliche Optimierungsprobleme zu lösen. Es ist ebenso denkbar, mehrere Zielfunktionen in ein Optimierungsproblem zusammenzufassen. Vorteilhaft erfolgt diese Optimierung computergestützt, was den zeitlichen Bedarf des Optimierens im Vergleich zu einem manuellen Berechnen von Ausbauoptionen vorteilhaft deutlich verringert. Somit sind Gesamtanalysen eines Energieversorgungssystem mit weniger zeitlichem Aufwand und unterschiedlichen Optimierungszielen vorteilhaft möglich.

In einer weiteren vorteilhaften Ausgestaltung und Weiterbildung der Erfindung werden als Ausbaudaten Wetterdaten, Investitionskosten, Vergütungskonditionen, eine örtliche Beschaffenheit der Knotenpunkte, Schadstoffemissionen und/oder Netzrandbedingungen verwendet. Auch die Betriebssicherheit und die Toleranz gegenüber Lastspitzen können als Ausbaudaten verwendet werden. Vorteilhaft ist es möglich, Ausbaudaten aus unterschiedlichen Bereichen, insbesondere Vergütungskonditionen mit Wetterdaten, zu kombinieren und automatisiert in das Optimierungsproblem zu integrieren, um eine Gesamtlösung für den Ausbau eines Energieversorgungssystems zu erhalten.

In einer weiteren vorteilhaften Ausgestaltung und Weiterbildung der Erfindung weist das Energieversorgungssystem wenigstens zwei elektrisch verbundene Energiesubsysteme auf, wobei zu den Energiesubsystemen als Betriebsdaten Einspeisedaten ermittelt werden und als Zielfunktion eine Optimierung der Einspeisedaten durchgeführt wird. Vorteilhaft können somit gezielt einzelne Energiesubsysteme des gesamten Energieversorgungssystems ausgebaut werden, um eine optimale Einspeisung elektrischer Energie in ein elektrisches Netz zu ermöglichen.

In einer weiteren vorteilhaften Ausgestaltung und Weiterbildung der Erfindung umfassen die Einspeisedaten Vergütungskonditionen zum Empfang und/oder Bereitstellen von elektrischer Energie. Es werden sowohl Echtzeitdaten also auch historische Daten betrachtet. Vorteilhaft ist es somit möglich mittels der Ausbauoptimierung sowohl eine ökonomische Optimierung als auch eine technische Optimierung des Energieversorgungssystems zu gewährleisten. Es ist vorteilhaft möglich, ein überregionales Design eines Energieversorgungssystems durch das Zusammenführen mehrerer lokaler Energiesubsysteme, welche auch als mehrere lokale Energiemärkte betrachtet werden können, zusammenzuführen.

In einer weiteren vorteilhaften Ausgestaltung und Weiterbildung der Erfindung wird eine Optimierung für einzelne Energiesubsysteme oder für das gesamte Energieversorgungssystem durchgeführt. In anderen Worten ist es möglich, zu definieren, auf welche Knotenpunkte sich die Optimierung des Ausbaus des Energieversorgungssystems beziehen soll. Es ist möglich, einzelne Energiesubsysteme auszuwählen. Es ist ebenso möglich das gesamte Energieversorgungssystem, also alle Knotenpunkte auszuwählen. Dies ermöglicht vorteilhaft ein flexibles Anpassen der Optimierung an die Ziele des Ausbaus des Energieversorgungssystems. Das wiederum ermöglicht den gezielten Ausbau des Energieversorgungssystems an kritischen Knotenpunkten, also insbesondere an Knotenpunkten, die instabil sind. Dies kann insbesondere eine stark überlastete Leitung sein.

In einer weiteren vorteilhaften Ausgestaltung und Weiterbildung der Erfindung weist das Energieversorgungssystem in Abhängigkeit des Ausbauergebnisses wenigstens eine Erweiterungskomponente auf. In anderen Worten wird das dezentrale Energieversorgungssystem um die wenigstens eine Erweiterungskomponente an dem ermittelten Ort erweitert, und umfasst nach der Erweiterung diese Erweiterungskomponente während des Betriebs. Vorteilhaft wird dadurch erreicht, dass das Energieversorgungssystem gemäß der Zielfunktion des Optimierungssystems insbesondere effizienter, ökonomischer und/oder stabiler ausgestaltet ist.

In einer weiteren vorteilhaften Ausgestaltung und Weiterbildung der Erfindung ist die Erweiterungskomponente eine Photovoltaikanlage, ein Blockheizkraftwerk, ein Batteriespeicher oder ein Kondensator. Vorteilhaft können unterschiedliche Erweiterungskomponenten parallel oder nacheinander durch die computergestützte Optimierung der Zielfunktion betrachtet werden und eine optimale Auswahl der Erweiterungskomponenten durch das Ausbauergebnis ermittelt werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: ein Energieversorgungssystem mit zwei Energiesubsystemen, zwei Erfassungseinrichtungen und einer Ausbaueinheit;
- Figur 2: ein Energieversorgungssystem mit zwei Energiesubsystemen, zwei Erfassungseinrichtungen, einer Ausbaueinheit angeordnet in einem lokalen Energiemarkt;
- Figur 3: ein Verfahrensschema zum Ändern des Aufbaus eines dezentralen Energieversorgungssystems.

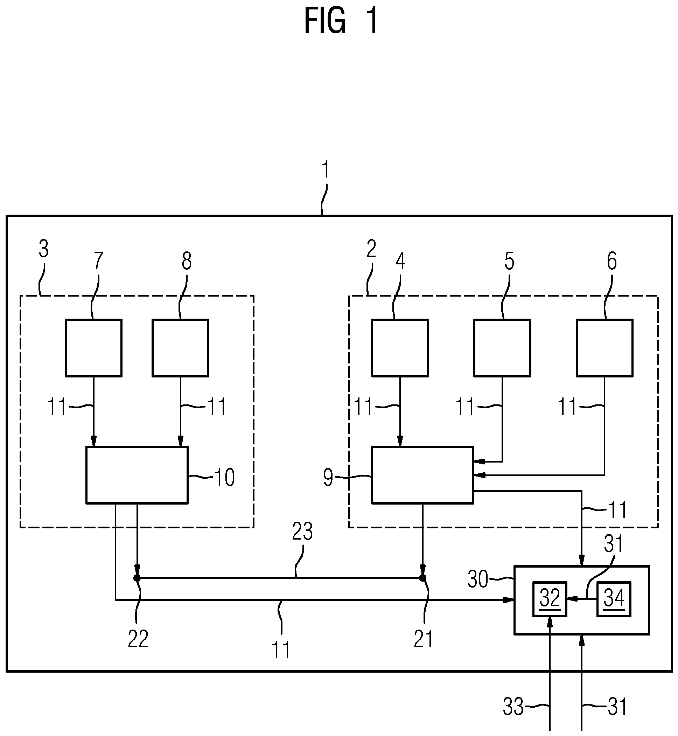

Figur 1 zeigt ein Energieversorgungssystem 1 mit einem ersten Energiesubsystem 2 und einem zweiten Energiesubsystem 3. Das erste Energiesubsystem 2 ist insbesondere ein Gebäude. Das erste Energiesubsystem 2 umfasst eine Photovoltaikanlage 4, einen Batteriespeicher 5 und einen ersten elektrischen Verbraucher 6. Als der erste elektrische Verbraucher 6 können insbesondere weiße Ware, ein Elektroauto oder ähnliches eingesetzt werden. Das zweite Energiesubsystem 3 ist insbesondere ein Campus oder ein Stadtteil. Das zweite Energiesubsystem 3 umfasst eine Windkraftanlage 7 als elektrischen Erzeuger und einen zweiten elektrischen Verbraucher 8. Der zweite elektrische Verbraucher ist insbesondere eine Heizung. Das erste Energiesubsystem 2 umfasst eine erste Erfassungseinrichtung 9. Das zweite Energiesubsystem 3 umfasst eine zweite Erfassungseinrichtung 10. Beide Erfassungseinrichtungen erfassen die Betriebsdaten 11 der elektrischen Erzeuger, elektrischen Verbraucher und Speicher. Als Betriebsdaten werden insbesondere Messdaten, insbesondere der Energiemenge und elektrische Leistung, erfasst.

Das Energieversorgungssystem 1 umfasst eine Ausbaueinheit 30. Die Ausbaueinheit 30 umfasst eine Ausbausteuereinheit 34 und eine Rechnereinheit 32. Der Rechnereinheit 32 wird ein Optimierungsproblem 33 gestellt. Die Betriebsdaten 11 und die Ausbaudaten 31 werden an die Rechnereinheit übertragen. Der Ausbaueinheit 30, insbesondere der Ausbausteuereinheit 34, werden in diesem Beispiel von außerhalb des Energieversorgungssystems 1, Ausbaudaten 31 bereitgestellt. Es werden typischerweise die Ausbaudaten 31 bereitgestellt, die die zu untersuchende Ausbaukomponente beschreiben. In diesem Beispiel wird als Erweiterungskomponente der Ausbau des Energieversorgungssystems durch eine zusätzliche Photovoltaikanlage analysiert. Als Ausbaudaten 31 werden in diesem Beispiel Wetterdaten, Investitionskosten der Photovoltaikanlage, Vergütungskonditionen des ökologisch erzeugten Stroms, eine örtliche Beschaffenheit des ersten Knotenpunkts und des zweiten Knotenpunktes sowie Netzrandbedingungen bereitgestellt. Weiterhin werden die Betriebsdaten, in diesem Beispiel historische Daten und Echtzeitdaten, an die Ausbaueinheit 30 übermittelt. Als ein Optimierungsproblem wird hier der mögliche Aufbau einer Photovoltaikanlage an einem der beiden Knotenpunkten des Energieversorgungssystems computergestützt gelöst. Als die Zielfunktion wird eine Minimierung der Kosten der Energieversorgung der Energiesubsysteme bei gleichzeitiger Reduktion der Kohlenstoffdioxidemission eingesetzt. In anderen Worten soll eine Minimierung der Summe aus den Anschaffungskosten der Ausbaukomonenten, der laufenden Kosten sowie der Kosten für eine Kohlenstoffdioxidemission erfolgen. Als Nebenbedingungen geht mit ein, dass der Verbrauch zum Zeitpunkt t gleich der Erzeugung zum Zeitpunkt t sein soll. Weiterhin geht als Nebenbedingung mit ein, dass eine maximale Leistung der Photovoltaikanlage kleiner oder gleich dem Flächenpotential der Photovoltaikanlage sein soll. Weiterhin geht der Leitwert G der elektrischen Leitungen als Nebenbedingung mit in das Optimierungsproblem ein. Diese Nebenbedingungen stellen beispielhaft vereinfachte Nebenbedingungen dar.

Als ein Ausbauergebnis wird in diesem Beispiel ermittelt, dass eine Erweiterung mit einer zusätzlichen Photovoltaikanlage am ersten Knotenpunkt eine Lösung des Optimierungsproblems darstellt, da in diesem Knotenpunkt der elektrische Verbrauch der Teilnehmer mit der elektrischen Energieerzeugung der Photovoltaikanlage korreliert, insbesondere diese abdecken kann. Ein weiterer Grund, die Photovoltaikanlage an diesem Knotenpunkt zu ergänzen wäre der, dass das Energienetz an alternativen Knotenpunkten nicht ausreichend ausgebaut ist.

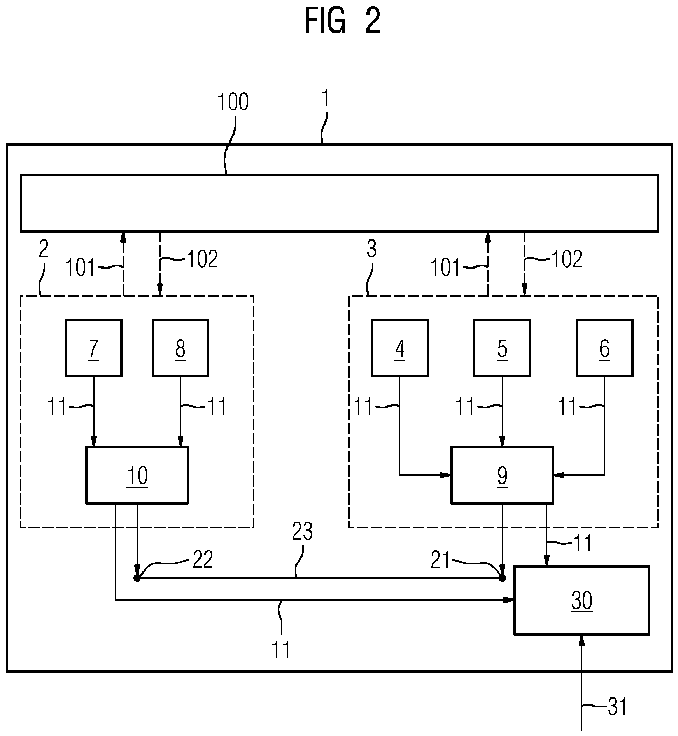

Figur 2 zeigt das Energieversogungssystem 1 gemäß dem ersten Beispiel aus Figur 1. Zusätzlich sind in diesem zweiten Beispiel das erste Energiesubsystem 21 und das zweite Energiesubsystem 22 über einen lokalen Energiemarkt 100, insbesondere mit einem Energieversorger oder dem EPEX Spot Market, miteinander verbunden. Der lokale Energiemarkt übergibt Gebote 101 an die Energiesubsysteme und erfasst Marktergebnisse 102 von den Energiesubsystemen. Ein Gebot 101 umfasst implizit auch die Vorhersage des Energiemarktteilnehmers über dessen zukünftigen Bedarf an elektrischer Energie. Die Gebote, in anderen Worten Energieangebot und Energiebedarf, werden ermittelt und gespeichert. Das erste Energiesubsystem 2 gibt nun als Gebot ein Optimierungsproblem an die Ausbaueinheit 30: In diesem Beispiel gibt das erste Energiesubsystem 2 das Gebot ab, 10 MW lokal erzeugten Strom zu einem maximalen Preis, insbesondere von 35 ct/kWh, zu benötigen. Als Ausbaudaten 31 werden insbesondere die Wetterdaten am Standort der Photovoltaikanlage 4, sowie die Marktpreise des Stroms der Windkraftanlage 7 sowie weiterer Stromerzeuger des Energieversorgungssystems, in der Zeichnung nicht dargestellt, eingesetzt.

Es können nun unterschiedliche Optimierungsergebnisse als Lösung des Optimierungsproblems resultieren. Diese können entweder zentral mittels nur eines Optimierungsproblems gelöst werden oder basierend auf mehreren Optimierungsproblemen, insbesondere ermittelt durch einzelne Betreiber einzelner Energiesubsysteme.

Das erste Energiesubsystem 2 könnte um einen Batteriespeicher erweitert werden. Dies könnte dem ersten Energiesubsystem 2 ermöglichen, mit dem selbst erzeugten Strom den angegebenen Bedarf zu erfüllen. Es könnte sinnvoll sein, die bestehende Photovoltaikanlage 4 zu erweitern oder zusätzliche Energieerzeuger zu installieren. Ebenso kann ein Ergebnis sein, den in dem zweiten Energiesubsystem 3 erzeugten elektrischen Strom an das erste Ernergiesubsystem 2 zu übetragen. Dabei kann auch die Dimensionierung des Stromnetzes 23 überprüft werden. Als Ergebnis könnte dann auch ein Netzausbau vorgeschlagen werden.

Weiterhin kann das Lösen des Optimierungsproblems in diesem zweiten Beispiel um die Flexibilität der beiden Knotenpunkte erweitert werden. Die Flexibilität wird aus einem Vergleich einer bekannten Ist-Konfiguration des Energieversorgungssystems 1 mit einer Soll-Konfiguration ermittelt. Die Ist-Konfiguration beschreibt insbesondere eine Anzahl und räumliche Anordnung sowie Vernetzung von einer Mehrzahl von Komponenten des Energieversorgungssystems 1. Die Soll-Konfiguration wird mittels eines Energiedesignsystems (nicht in der Abbildung gezeigt) anhand der Betriebsdaten 11 aus der ersten Erfassungseinheit 9 und der zweiten Erfassungseinheit 10 ermittelt. Die Soll-Konfiguration beschreibt also eine hypothetische Konfiguration des Energieversorgungssystems 1, welche im Hinblick auf wenigstens ein Gütekriterium, wie eine Energieeffizienz einer Energiebereitstellung oder ein Ausnutzungsgrad von Preisschwankungen oder einer Kosteneffizienz, optimiert ist. Alternativ oder zusätzlich kann auch noch die Ist-Konfiguration bezüglich der Energieabgaben und Energieaufnahmen mit einer Soll-Konfiguration bezüglich der angeforderten Energieabgaben und Energieaufnahmen, in anderen Worten den Geboten und Marktergebnissen, verglichen werden.

Für den Fall, dass der Vergleich der Ist-Konfiguration mit der Soll-Konfiguration eine große Abweichung ergibt, ergibt sich eine große Flexibilität. Diese Flexibilität wird insbesondere für die Knotenpunkte ermittelt. Eine große Flexibilität legt nahe, dass an diesem Knotenpunkt eine Änderung des Energieversorgungssystems 1, insbesondere ein Ausbau, sinnvoll ist. Die Flexibilität geht in diesem Beispiel, insbesondere als Nebenbedingung, mit in das Optimierungsproblem ein.

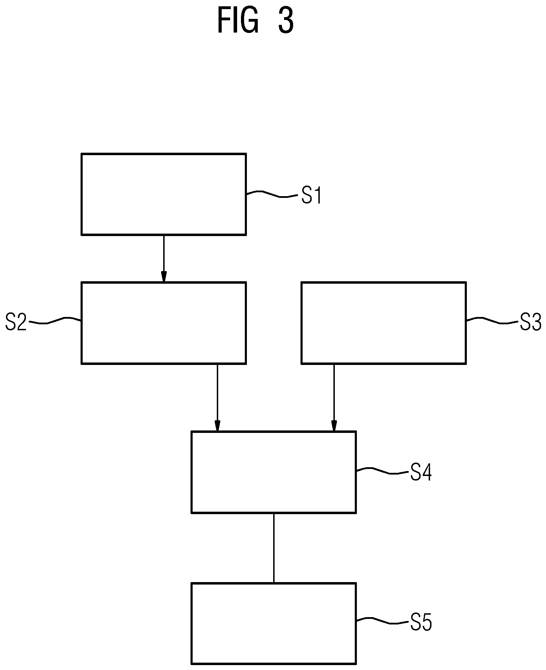

Figur 3 zeigt ein Verfahrensschema zum Ändern des Aufbaus eines dezentralen Energieversorgungssystems mit mehreren Schritten. Zunächst wird ein Energieversorgungssystem 1 bereitgestellt S1. In einem nächsten Schritt S2 werden Betriebsdaten 11 in der Erfassungseinheit 9, 10 erfasst und bereitgestellt. Die Betriebsdaten werden in dem Schritt S2 an eine Recheneinheit 32 der Ausbaueinheit 30 übertragen. In einem dritten Schritt S3, welcher unabhängig vom zweiten Schritt S2 durchgeführt werden kann, werden Ausbaudaten an eine Ausbausteuereinheit 34 bereitgestellt und von dort an die Recheneinheit 32 übertragen. In einem nächsten vierten Schritt S4 wird das Optimierungsproblem computergestützt in der Recheneinheit 32 gelöst und ein Ausbauergebnis ermittelt. In einem fünften Schritt S5 wird das Energieversorgungssystem 1 in Abhängigkeit des Ausbauergebnisses um eine Erweiterungskomponente erweitert.

In den genannten Beispielen umfasst die Ausbaueinheit 30 eine Recheneinheit 32. Es sind eine Vielzahl weiterer Konfigurationen der Recheneinheiten denkbar. So könnte insbesondere die Ausbaueinheit selbst als eine Recheneinheit ausgestaltet sein, welche die Ausbauten und Betriebsdaten direkt erfasst und das Lösen des Optimierungsproblems durchführt. Es ist ebenfalls möglich, die Daten des lokalen Energiemarkts in der Ausbaueinheit zu erfassen. Weiterhin können die Erfassungseinheiten als zentrale Serverstruktur, insbesondere auch über mehrere Energiesubsysteme und mehrere Energiemärkte hinweg, zusammengefasst werden. Die zentrale Serverstruktur übernimmt dann die Sammlung und Aufbereitung der Betriebsdaten Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: Energieversorgungssystem
- 2: erstes Energiesubsystem
- 3: zweites Energiesubsystem
- 4: Photovoltaikanlage
- 5: Batteriespeicher
- 6: erster elektrischer Verbraucher
- 7: Windkraftanlage
- 8: zweiter elektrischer Verbraucher
- 9: erste Erfassungseinrichtung
- 10: zweite Erfassungseinrichtung
- 11: Betriebsdaten
- 21: erster Knotenpunkt
- 22: zweiter Knotenpunkt
- 23: elektrisches Netz
- 30: Ausbaueinheit
- 31: Ausbaudaten
- 32: Recheneinheit
- 33: Optimierungsproblem
- 34: Ausbausteuereinheit
- 100: Lokaler Energiemarkt
- 101: Gebote
- 102: Marktergebnisse
- S1: Bereitstellen eines Energieversorgungssystems
- S2: Erfassen und Bereitstellen von Betriebsdaten in der Erfassungseinheit und Übertragen an eine Recheneinheit
- S3: Bereitstellen von Ausbaudaten durch eine Ausbausteuereinheit und Übertragen an eine Recheneinheit
- S4: computergestütztes Lösen eines Optimierungsproblems und Ermitteln eines Ausbauergebnisses in der Rechenheinheit
- S5: Erweitern des Energieversorgungssystems in Abhängigkeit des Ausbauergebnisses um eine Erweiterungskomponente

## Patentansprüche

1. Verfahren zum Ändern des Aufbaus eines dezentralen Energieversorgungssystems (1) mit folgenden Schritten:
- Bereitstellen des Energieversorgungssystems (1) mit wenigstens einem Energiesubsystem (2, 3) mit wenigstens einem Energieerzeuger (4, 7) und wenigstens einem Energieverbraucher (6, 8), wobei der Energieerzeuger (4, 7) und der Energieverbraucher (6, 8) elektrisch verbunden sind und wenigstens zwei Knotenpunkte (21, 22) zwischen dem Energieerzeuger (4, 7) und dem Energieverbraucher (6, 8) angeordnet sind und wobei das Energieversorgungssystem (1) eine Erfassungseinheit (9, 10) umfasst, wobei die Erfassungseinheit (9, 10) Betriebsdaten (11) aufnimmt und bereitstellt,
- Bereitstellen von Ausbaudaten (31) zu dem Energieversorgungssystem (1) für wenigstens eine Erweiterungskomponente für das Energieversorgungssystem (1) durch eine Ausbausteuereinheit (34),
- Ermitteln eines Ausbauergebnisses der Art der Erweiterungskomponente und des Installationsortes der Erweiterungskomponente für das Energieversorgungssystem (1) in einer Rechnereinheit (32) basierend auf einer Lösung eines Optimierungsproblems (33), wobei das Optimierungsproblem (33) mittels eines computergestützten Optimierens einer Zielfunktion gelöst wird und wobei in die Zielfunktion und/oder die Nebenbedingungen des Optimierungsproblems (33) die Betriebsdaten (11) und die Ausbaudaten (31) eingehen,
- in Abhängigkeit des Ausbauergebnisses Erweitern oder Reduzieren des Energieversorgungssystems (1) um die ermittelte Art der Erweiterungskomponente an dem ermittelten Installationsort.

2. Verfahren nach Anspruch 1, wobei als der Installationsort ein Knotenpunkt (21, 22) ermittelt wird.

3. Verfahren nach einem der vorhergehenden Ansprüche, wobei eine Soll-Konfiguration des Energieversorgungssystems (1) anhand der Betriebsdaten (11) in einem Energiedesignsystem ermittelt wird und eine Ist-Konfiguration des Energieversorgungssystems (1) mit der Soll-Konfiguration mittels einer Recheneinrichtung verglichen wird, darauf basierend eine Flexibilität eines Knotenpunktes bestimmt wird und/oder basierend auf einer Differenz von Geboten an einem Energiemarkt und den Betriebsdaten eine Prognoseunsicherheit bestimmt wird und die Flexibilität und/oder die Prognoseunsicherheit in die Zielfunktion und/oder in die Nebenbedingungen des Optimierungsproblems eingehen.

4. Verfahren nach Anspruch 3, wobei die Flexibilität für jeden Knotenpunkt des Energieversorgungssystems ermittelt wird.

5. Verfahren nach einem der vorhergehenden Ansprüche, wobei als die Zielfunktion eine Effizienzoptimierung, eine Erhöhung des Anteils erneuerbarer Energien im Energieversorgungssystem, eine Reduzierung von Emissionen, eine Erhöhung der ökonomischen Wertschöpfung und/oder eine Erhöhung der Stabilität des Energieversorgungssystems (1) verwendet wird.

6. Verfahren nach einem der vorhergehenden Ansprüche, wobei als Ausbaudaten (31) Wetterdaten, Investitionskosten, Vergütungskonditionen, eine örtliche Beschaffenheit der Knotenpunkte (21, 22), Schadstoffemissionen und/oder Netzrandbedingungen verwendet werden.

7. Verfahren nach einem der vorhergehenden Ansprüche, wobei das Energieversorgungssystem (1) wenigstens zwei elektrisch verbundene Energiesubsysteme (2, 3) aufweist, wobei zu den Energiesubsystemen (2, 3) als Betriebsdaten (11) Einspeisedaten ermittelt werden und als Zielfunktion eine Optimierung der Einspeisedaten durchgeführt wird.

8. Verfahren nach Anspruch 5, wobei die Einspeisedaten Vergütungskonditionen zum Empfang und/oder Bereitstellen von elektrischer Energie umfassen.

9. Verfahren nach einem der vorhergehenden Ansprüche, wobei eine Optimierung für einzelne Energiesubsysteme (2, 3) oder für das gesamte Energieversorgungssystem (1) durchgeführt wird.

10. Verfahren nach einem der vorhergehenden Ansprüche, wobei beruhend auf der Flexibilität ein Effizienzwert und/oder Prognosegütewert ermittelt wird.

11. Dezentrales Energieversorgungssystem (1) umfassend:
- wenigstens ein Energiesubsystem (2, 3) mit wenigstens einem Energieerzeuger (4, 7) und wenigstens einem Energieverbraucher (6, 8), wobei der Energieerzeuger (4, 7) und der Energieverbraucher (6, 8) elektrisch verbunden sind und wenigstens zwei Knotenpunkte (21, 22) zwischen dem Energieerzeuger (4, 7) und dem Energieverbraucher (6, 8) angeordnet sind
- eine Erfassungseinheit (9, 10), wobei die Erfassungseinheit (9, 10) eingerichtet ist, Betriebsdaten (11) aufzunehmen und bereitzustellen,
- eine Ausbausteuereinheit (34) eingerichtet zum Bereitstellen von Ausbaudaten (31) zu dem Energieversorgungssystem (1) für wenigstens eine Erweiterungskomponente für das Energieversorgungssystem (1) und zum Ermitteln eines Ausbauergebnisses umfassend Art der Erweiterungskomponente und des Installationsortes der Erweiterungskomponente für das Energieversorgungssystem (1) basierend auf einem computergestützten Optimieren einer Zielfunktion, wobei in die Zielfunktion und/oder die Nebenbedigungen des Optimierungsproblems (33) die Betriebsdaten (11) und die Ausbaudaten (31) eingehen.

12. Dezentrales Energieversorgungssystem gemäß Anspruch 11, welches in Abhängigkeit des Ausbauergebnisses wenigstens eine Erweiterungskomponente aufweist.

13. Dezentrales Energieversorgungssystem nach einem der Ansprüche 11 oder 12 mit einem Energiedesignsystem eingerichtet zum Ermitteln einer Soll-Konfiguration des Energieversorgungssystems (1) basierend auf den Betriebsdaten.

14. Dezentrales Energieversorgungssystem nach einem der Ansprüche 11 bis 13, wobei die Erweiterungskomponente eine Photovoltaikanlage, ein Blockheizkraftwerk, ein Batteriespeicher und/oder ein Kondensator ist.

15. Computerprogrammprodukt mit Befehlen, welche bei Ausführung eines Datenverarbeitungsprogramms durch eine Datenverarbeitungseinrichtung die Datenverarbeitungseinrichtung dazu veranlassen, ein Verfahren zum computergestützten Optimieren einer Zielfunktion gemäß einem der Ansprüche 1 bis 10 durchzuführen.
